# EUROPEAN PATENT APPLICATION

(11) **EP 2 385 275 A1**
(43) Date of publication of application: **09.11.2011**
(21) Application number: 11161974.8
(22) Date of filing: 12.04.2011
(51) Int. Cl.: F16J 15/06, F16J 15/18, F16J 15/32, F16J 15/46, F01D 11/00, F02C 7/25, F02C 7/32, F16L 5/04

(54) **A fireseal**

(30) Priority: 04.05.2010 GB 1007327
(71) Applicant: Rolls-Royce plc, London SW1E 6AT (GB)
(72) Inventor: Selby, Alan, Ripley, Derbyshire DE5 8NW (GB)
(74) Representative: Yeomans, Victoria Jane Anora

(57) **Abstract**

A fireseal (42) for sealing around a cylindrical shaft or pipe. The fireseal is helical and has an expanded cross-section in a central portion (44) intermediate its ends (46,48).

## Description

The present invention relates to a fireseal, particularly but not exclusively for a gas turbine engine.

A gas turbine engine comprises multiple fire zones which are at different relative pressures. The interface between adjacent fire zones must be sealed sufficiently to retard, or preferably prevent, fire propagating from one zone to another. Certification for such gas turbine engines defines the time period for which the fireseal must seal in fire conditions. One fire zone interface is at the junction of the aerodynamic splitter fairing and the radial drive shaft, with the direction of fire propagation being generally aligned with the longitudinal axis of the radial drive shaft and directed from the higher pressure to the lower pressure side of the interface. However, the fairing splitter and radial drive shaft move relative to one another during engine running, so that the fireseal is required to maintain the seal and fire integrity during the relative movements of the components.

A conventional fireseal comprises an annular seal that has a sealing part of generally circular cross-section and a flange part for connection to another component. Thus the overall cross-section is P-shaped. Since the longitudinal ends of the radial drive shaft are inaccessible once the engine is constructed, the conventional fireseal is formed in two parts with an interlocking plug and recess arrangement. The halves are slotted together and generally glued and sealed using an elastomer such as silcoset.

One problem with this conventional fireseal is that the space in which the fireseal is located is relatively small. The flange part must have a finite diameter to receive fixings therethrough, for example rivets. Thus the sealing part is relatively small. It is well known that seals work more efficiently when compressed 20 to 40% by height. As the sealing part is small, the capacity for compression is minimised and so the seal is liable to be overcompressed when the radial drive shaft and fairing splitter move relative to one another. Overcompression of the fireseal causes excessive wear and can result in premature failure. The radial drive shaft may also be worn. Once the fireseal has been damaged by overcompression it must be replaced. This is time consuming, difficult and expensive because the fixings must be removed from the flange which may include dismantling the fairing, the elastomer must be removed without damaging the radial drive shaft and then the fireseal removed. Then the same operations must be performed in reverse to fit a new fireseal into position.

The present invention seeks to provide a fireseal that addresses the aforementioned problems.

Accordingly the present invention provides a fireseal for sealing around a cylindrical shaft or pipe, the fireseal being helical and having an inflated central portion intermediate its ends. The inflated central portion thus has an expanded cross-section relative to the end portions. Advantageously the fireseal can be fitted around a shaft or pipe in one piece without needing to be assembled from two or more components and is quick and simple to remove and replace.

The helix may comprise at least two turns. The central portion may comprise at least one turn of the helix. Advantageously this provides at least one complete turn of sealing and more turns to protect the sealing turn or turns.

The ends of the fireseal may have substantially linear cross-section. This provides a substantially planar surface to seat against an adjacent component.

The central portion has a form based on one of: circular, oval, square, rectangular, D-shaped, or trapezoidal. The central portion may be finned. The fins may be rounded or pointed. The fins provide additional sealing points of contact.

The central portion may be inflated by air or another gas. The fireseal may further comprise pressurising holes for gas inflow. Advantageously, the gas inflow occurs during use whenever the pressure in the central portion reduces so it is less inflated than the design inflation. The pressurising holes may be located through the outer surface of the helix or may be located through a helical surface of the helix, perpendicular to the cross-section.

The present invention also provides a fireseal cassette comprising a first cap member, a second cap member and a fireseal as described above, the fireseal compressed between the first and second cap members to form the fireseal cassette. Advantageously, the cap members are used to mount the fireseal in place without requiring flanges or the like to attach the fireseal to other components.

At least one of the first and second cap members may comprise pressurising holes to align with pressurising holes of the fireseal.

The first and second cap members may each comprise a flange for affixing the cassette to another component.

The present invention further provides a gas turbine engine comprising a shrouded radial drive shaft having a fireseal as described above positioned around the radial drive shaft.

The present invention will be more fully described by way of example with reference to the accompanying drawings, in which:
Figure 1 is a sectional side view of a gas turbine engine including a fireseal according to the present invention.
Figure 2 is a schematic perspective view of a fireseal according to the present invention.
Figure 3 is a partially sectioned view otherwise similar to Figure 2.
Figure 4 shows alternative cross-sections for the fireseal of the present invention.

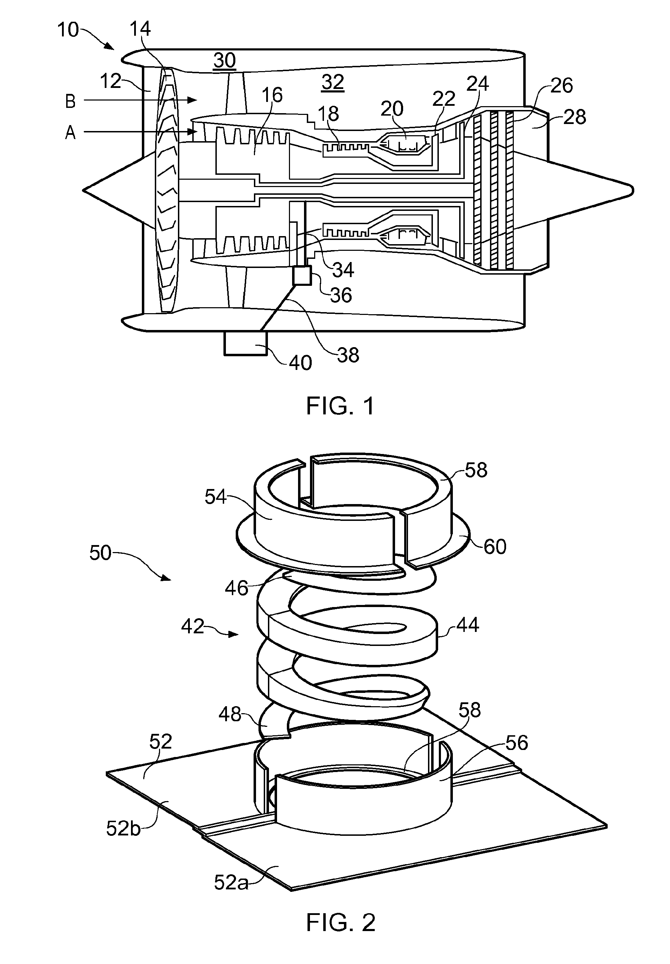

A gas turbine engine 10 is shown in Figure 1 and comprises an air intake 12 and a propulsive fan 14 that generates two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. A nacelle 30 surrounds the gas turbine engine 10 and defines, in axial flow B, a bypass duct 32. A radial drive shaft 34 extends from the core engine, between the intermediate and high pressure compressors 16, 18, to a step aside gearbox 36 mounted on the compressor casing. The radial drive shaft 34 is surrounded by a static shroud. An angled drive shaft 38 extends from the step aside gearbox 36 to an external gearbox 40 mounted on the outside of the fan casing.

An exemplary embodiment of the fireseal 42 of the present invention is shown in Figure 2. The fireseal 42 is, for example, used to seal around the radial drive shaft 34 shown in Figure 1 between fire zones comprising the core and the fan casing. More specifically, the fireseal 42 seals around the static shroud as the wear caused by sealing around the rotating radial drive shaft 34 is unacceptably high in most applications. However, it is to be understood that the fireseal 42 of the present invention can be used to seal directly around the radial drive shaft 34 or around its static shroud and references herein to one of these components does not preclude the other unless it is clear that is what is meant.

The fireseal 42 is helical and has end portions 46, 48 and a central portion 44, intermediate those ends 46, 48, that has an inflated cross-section. The helical fireseal 42 comprises at least two turns, with the central portion 44 comprising at least one turn of the helix. The central portion 44 provides the main sealing against the radial drive shaft 34. The end portions 46, 48 have substantially linear cross-section so that they present a flat surface. The cross-section of the fireseal 42 preferably transitions smoothly from the inflated central portion 44 to the linear end portions 46, 48.

The linear cross-section end portions 46, 48 provide a substantially planar surface to seat against an adjacent component. Each end portion 46, 48 comprises sufficient length that it protects the turn or turns of the central portion 44 from heat and flames in the event of fire attempting to propagate through the fireseal 42. The central portion 44 has cross-section that is somewhat oversized for the gap it is designed to seal so that, in use, it is compressed. Optimally, the central portion 44 is compressed by 20 to 40% of the seal height when the radial drive shaft 34 and fairing splitter are relatively positioned according to design. The fireseal 42 is therefore compressed more or less when the relative positions of the radial drive shaft 34 and fairing splitter are off design. Preferably the central portion 44 is compressed by an amount at design so that it is compressed within the 20 to 40% limits at most conceivable off design conditions. This is easier to achieve than the prior art annular fireseal arrangement because the cross-section of the central portion 44 can be larger than the cross-section of the annular fireseal since there is no requirement for a flange portion and the consequent reduction in space for the circular cross-section portion. Thus, 20 to 40% limits of the present invention fireseal 42 encompass a greater absolute range than for the prior art fireseal.

The fireseal 42 is shown in Figure 2 as a helix having steep pitch so that there is free air between adjacent turns of the helix. However, when mounted for use, the fireseal 42 is compressed longitudinally so that adjacent turns of the helix abut. In some applications, the longitudinal compression may be more than required to cause the turns to abut so that a small compression is applied to the central portion 44 to assist in better sealing the gap between the radial drive shaft 34 and the fairing splitter.

Figure 2 shows the components forming a fireseal cassette 50 and a component 52 to which the fireseal cassette 50, or a part thereof, is mounted, for example part of the fairing splitter. The fireseal cassette 50 comprises a first cap member 54 and a second cap member 56. Each cap member 54, 56 has the form of a hollow cylinder having a flange 58 extending from one edge of the cylinder wall, perpendicularly therefrom, towards the longitudinal axis of symmetry. The cap members 54, 56 each have diameter greater than the external diameter of the helical fireseal 42 so that the fireseal 42 seats within the cylindrical parts of the cap members 54, 56.

The first cap member 54 has larger diameter than the second cap member 56 so that the second cap member 56 can seat within the first cap member 54. The first cap member 54 may also comprise a further flange 60 that extends perpendicularly from the other edge of the cylindrical wall, away from the longitudinal axis. Fixings can be applied to the further flange 60 to affix it, in use, to the component 52. Such fixings include adhesive, rivets and screws, and any other fixings known to the skilled man. Alternatively, the relative diameters of the first and second cap members 54, 56 may be reversed so that the first cap member 54 seats within the second cap member 56. The further flange 60 in this case would also be provided on the second cap member 56 instead of the first cap member 54.

The ends of the radial drive shaft 34 are not accessible when the gas turbine engine 10 is fully constructed. Therefore, in order to mount the fireseal cassette 50 to the radial drive shaft 34 each cap member 54, 56 is provided in two parts that are approximately semi-cylindrical. In the fairing splitter application the component 52 comprises part of the fairing splitter and is formed in two sections 52a, 52b that overlap in the position shown in Figure 2. One section 52a is fixed relative to the engine 10 whilst the other section 52b moves with the fairing splitter and can therefore be pivoted away from the one section 52a.

The two parts of the second cap member 56 are respectively mounted to the two sections 52a, 52b of the fairing splitter. The mounting is between the flange 58 and each section 52a, 52b of the fairing splitter and may be via adhesive, rivets, screws or any other suitable type of fixing. Advantageously, the cap members 54, 56 are not designed to be replaced during the life of the engine 10 so there is no need for the fixing to be reversible. Indeed, the second cap member 56 parts may be integrally formed with the sections 52a, 52b of the fairing splitter.

The fireseal 42 is then wound around the radial drive shaft 34 so that the second end 48 is located within or close to the second cap member 56. Finally the two parts of the first cap member 54 are positioned around the radial drive shaft 34 close to or around the first end 46 of the fireseal 42. The parts of the first cap member 54 are then moved longitudinally towards the second cap member 56 to compress the fireseal 42 therebetween until the first cap member 54 is slotted over the second cap member 56. Preferably the join between the two parts of the first cap member 54 is at a different angle to the join between the two parts of the second cap member 56, for example at 90° thereto. Since the join between the two parts of each cap member 54, 56 is a potential air leakage and therefore fire path, the offset of the joins causes this potential path to be more torturous. The further flange 60 of the first cap member 54 is then fixed to the fairing splitter 52 as described above.

The fireseal cassette 50 therefore has longitudinal length approximately equal to the longitudinal length of either of the cap members 54, 56 although additional longitudinal length is required to fit the fireseal 42. In the event that the fireseal 42 must be replaced, the first cap member 54 is released from the component 52 and moved away from the radial drive shaft 34. The fireseal 42 can then be unwound from the radial drive shaft 34 and a new fireseal 42 wound onto the radial drive shaft 34. The first cap member 54 is then refitted. There is no requirement to remove the second cap member 56.

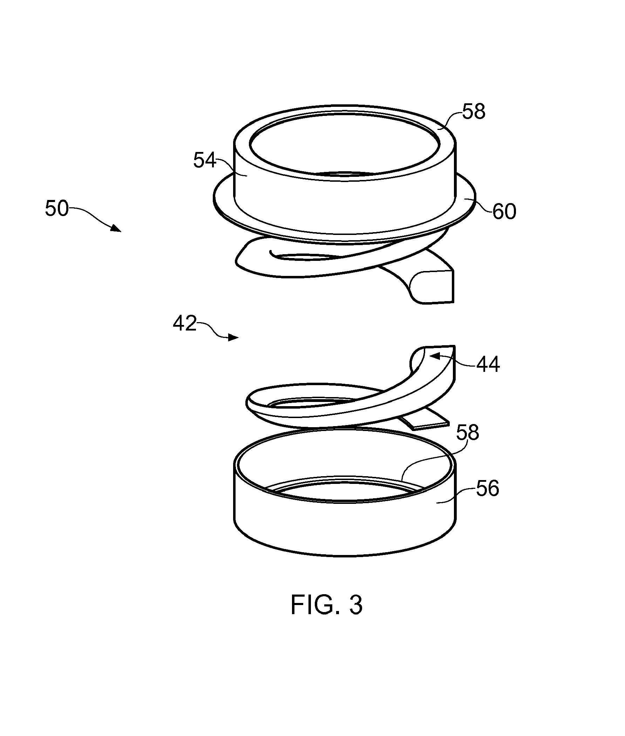

Although the fireseal 42 of the present invention has been described in relation to a radial drive shaft 34 of a gas turbine engine 10, it may also be used to seal around a pipe passing from a pressurised aircraft cabin through a bulkhead to an unpressurised zone. In this application at least one end of the pipe is generally accessible so the first and second cap members 54, 56 may each be formed in one part instead of two, as shown in Figure 3, and then slid onto the pipe. A further application of the fireseal 42 of the present invention is in mines where a shaft passes through a bulkhead separating different pressure zones.

Figure 3 also shows the fireseal 42 partially sectioned so that the cross-section of the central portion 44 is apparent. In this embodiment the central portion 44 is D-shaped in cross-section, arranged so that the flat surface forms the outside of the helix and the curved surface forms the inside of the helix that abuts the radial drive shaft 34. This shape is advantageous because the curved surface easily conforms to the radial drive shaft 34 as it moves relative to the fairing splitter, or the equivalent components in other applications.

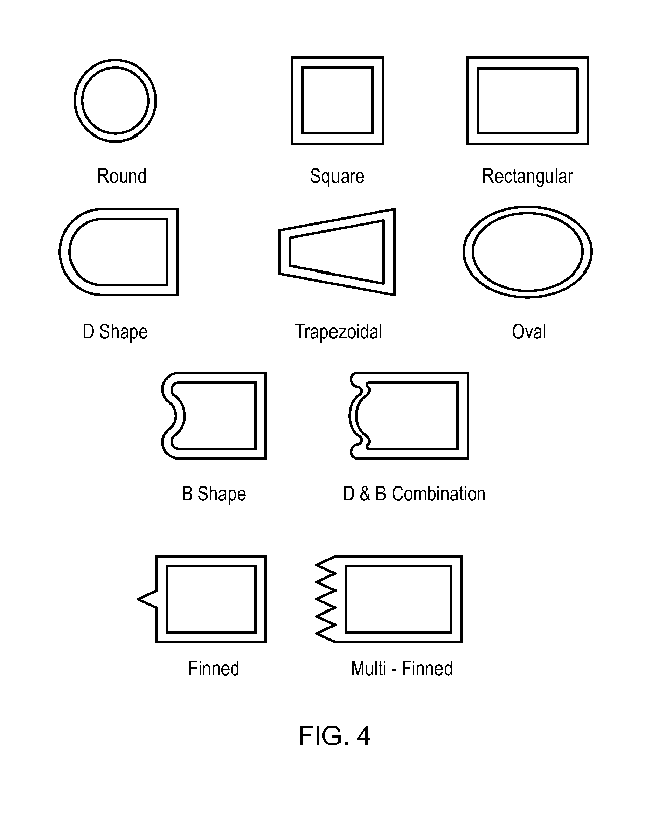

Figure 4 shows alternative shapes for the cross-section of the central portion 44 of the fireseal 42. Thus in the first two rows the central portion 44 cross-section may be circular, oval, square, rectangular, D-shaped or trapezoidal. The cross-section may include fins that are rounded or pointed. Two rounded fins may give a substantially B-shaped cross-section or a combination D+B cross-section, as shown in the third row of Figure 4. Alternatively a single pointed fin and a multi-finned cross-section are shown on the final row. It is to be understood that fins may be added to any of the cross-sections suggested, not only to the square or rectangular cross-sections.

The central portion 44 of the fireseal 42 may be expanded in a variety of ways. In the preferred embodiment, the fireseal 42 may be hollow and inflated by gas, particularly gas from the higher pressure side of the interface sealed by the fireseal 42. Advantageously, the inflating gas provides some cooling as it flows, which helps to retard fire propagation. Secondly, the fireseal 42 may be hollow and filled with a compressible material. The compressible material may comprise fire-retardant foam or another suitable material. Alternatively the central portion 44 of the fireseal 42 may be solid and formed of a compressible material such as silicon rubber. Beneficially this provides a relatively thick fireseal 42 to burn through in the event of fire which retard fire propagation.

In the case of the inflated central portion 44, the fireseal 42 includes pressurising holes for gas inflow so that the fireseal 42 inflates during running of the engine 10 and remains at the desired pressure since any leakage is topped up by further gas inflow. The pressurising holes are predominantly provided through the walls of the central portion 44 of the fireseal 42. Corresponding pressurising holes may also be provided in one or both of the first and second cap members 54, 56. The pressurising holes may be provided in the outer surface of the helix, aligned approximately radially to the longitudinal axis of the fireseal 42 and radial drive shaft 34. Alternatively, the pressurising holes may be provided in one of the helical surfaces of the fireseal 42, aligned approximately parallel to the longitudinal axis. The alignment of the pressurising holes depends on the relative position of the higher pressure zone in a particular application.

## Claims

1. A fireseal for sealing around a cylindrical shaft or pipe, the fireseal being helical and having an inflated central portion intermediate its ends.

2. A fireseal as claimed in claim 1 wherein the helix comprises at least two turns.

3. A fireseal as claimed in claim 2 wherein the central portion comprises at least one turn of the helix.

4. A fireseal as claimed in any preceding claim wherein the ends of the fireseal have substantially linear cross-section.

5. A fireseal as claimed in any preceding claim wherein the central portion has the form based on one of: circular, oval, square, rectangular, D-shaped, or trapezoidal.

6. A fireseal as claimed in any preceding claim wherein the central portion is finned.

7. A fireseal as claimed in claim 6 wherein the fins are rounded or pointed.

8. A fireseal as claimed in any preceding claim further comprising pressurising holes for gas inflow.

9. A fireseal as claimed in claim 8 wherein the pressurising holes are located through the outer surface of the helix.

10. A fireseal as claimed in claim 8 wherein the pressurising holes are located through a helical surface of the helix, perpendicular to the cross-section.

11. A fireseal cassette comprising a first cap member, a second cap member and a fireseal as claimed in any preceding claim, the fireseal compressed between the first and second cap members to form the fireseal cassette.

12. A fireseal cassette as claimed in claim 11 wherein at least one of the first and second cap members comprises pressurising holes to align with pressurising holes of the fireseal.

13. A fireseal cassette as claimed in claim 11 or 12 wherein the first and second cap members each comprise a flange for affixing the cassette to another component.

14. A gas turbine engine comprising a shrouded radial drive shaft having a fireseal as claimed in any of claims 1 to 10 positioned around the radial drive shaft.
